# EUROPÄISCHE PATENTSCHRIFT

(11) **EP 2 072 103 B1**
(45) Veröffentlichungstag und Bekanntmachung des Hinweises auf die Patenterteilung: **20.06.2012**
(21) Anmeldenummer: 08165912.0
(22) Anmeldetag: 06.10.2008
(51) Int. Cl.: B01D 35/147, B01D 29/15

(54) **Filterpatrone und Ölfilter eines Verbrennungsmotors**
Filter cartridge and oil filter of a combustion motor
Cartouche de filtre et filtre à huile d'un moteur à combustion

(30) Priorität: 20.12.2007 DE 202007017980 U
(43) Veröffentlichungstag der Anmeldung: 24.06.2009
(73) Patentinhaber: MANN+HUMMEL GmbH, 71638 Ludwigsburg (DE)
(72) Erfinder: Weindorf, Martin, 70806 Kornwestheim (DE)

(56) Entgegenhaltungen:
- EP-A- 0 309 137
- EP-A- 0 441 367
- EP-A- 1 199 093
- EP-A- 1 419 809
- WO-A-01/07819
- WO-A-02/058815
- WO-A-2006/034448
- DE-A1- 10 002 118
- DE-U1- 20 006 974
- FR-A- 2 885 819
- US-A1- 2005 000 886

## Beschreibung

### Technisches Gebiet

Die Erfindung betrifft eine Filterpatrone eines Verbrennungsmotors insbesondere für Kraftfahrzeuge mit den Merkmalen nach dem Oberbegriff des Anspruchs 1 sowie einen Ölfilter mit den Merkmalen nach dem Oberbegriff des Anspruchs 8.

### Stand der Technik

Ölfilter von Verbrennungsmotoren in vorbekannter Bauform weisen ein Filtergehäuse auf, in das eine auswechselbare Filterpatrone eingesetzt ist. Der Ölfilter befindet sich in einem Ölkreislauf, durch den Schmieröl mittels einer Pumpe hindurchgepumpt wird. Im gewöhnlichen Betrieb tritt dabei das Öl von einer Rohseite durch den Filterkörper der Filterpatrone hindurch zur Reinseite, wobei es von mitgeführten Partikeln gereinigt wird.

Unter bestimmten Betriebsbedingungen kann der Durchströmungswiderstand der Filterpatrone zu groß werden, was ohne zusätzliche Maßnahmen zu einer Unterversorgung der Schmierstellen mit Öl führt. Dies kann insbesondere beim Kaltstart des Verbrennungsmotors auftreten, wobei das Öl infolge der niedrigen Temperatur eine sehr hohe Viskosität aufweist, die zu einem übermäßig hohen Durchströmungswiderstand am Filterelement führt. Für solche oder vergleichbare Betriebszustände ist ein Filterumgehungsventil vorgesehen, welches oberhalb eines vorgegebenen Differenzdruckes selbsttätig öffnet, wobei das Öl durch das Filterumgehungsventil ohne Durchströmung des Filterkörpers direkt von der Rohseite zur Reinseite gelangt. Mit steigender Betriebstemperatur des Öls sinkt seine Viskosität, womit auch der Differenzdruck am Filterumgehungsventil geringer wird. Beim temperaturbedingten Unterschreiten einer bestimmten Viskosität schließt das Filterumgehungsventil wieder, wodurch der Filterkörper in vorgesehener Weise durchströmt wird und dabei seine Filtrierfunktion aufnimmt.

Aus der EP 1 419 809 A1 ist ein derartiger Ölfilter mit einer auswechselbaren Filterpatrone und einem Filterumgehungsventil bekannt. Das Filterumgehungsventil ist in einem abschraubbaren Gehäuseteil des Filtergehäuses angeordnet und wird bei Wartungsarbeiten gemeinsam mit diesem Gehäuseteil abgenommen. Hierbei kann die Filterpatrone ausgewechselt werden. Das abnehmbare Gehäuseteil weist zudem noch ein Ablaufventil auf. Mit diesem Ablaufventil kann der Innenraum des Ölfilters vor der Demontage entleert werden. Nach Auswechseln der Filterpatrone wird die Baueinheit aus dem unteren Gehäuseteil, dem Filterumgehungsventil und dem Ablaufventil wieder eingeschraubt, wonach der Verbrennungsmotor in Betrieb genommen werden kann.

Das in das abnehmbare Gehäuseteil integrierte Filterumgehungsventil muss als sogenanntes Lebensdauerbauteil aufwändig gestaltet und dimensioniert werden, um eine zuverlässige Funktion während der gesamten Lebensdauer des Filters sicherzustellen. Dies setzt eine vorsichtige Handhabung bei Wartungsarbeiten voraus. Beschädigungen durch Fehlbedienungen und in der Folge Fehlfunktionen können nicht sicher ausgeschlossen werden.
Die EP-A-1419809, die WO-A-01/07819 und die FE-A-2885819 offenbaren sowohl ein Filterumgehungsventil als auch ein Filterablaufventil. Die Funktionsweise der Ventile erfordert zwingend eine Relativbewegung zwischen dem Element, an dem der Ventilsitz für das Filterumgehungsventil ausgebildet ist, und dem Ventilkörper des Ablaufventils.

Der Erfindung liegt die Aufgabe zugrunde, eine gattungsgemäße Filterpatrone derart weiterzubilden, dass eine erhöhte Betriebssicherheit erzielt wird.

Diese Aufgabe wird durch eine Filterpatrone mit den Merkmalen des Anspruchs 1 gelöst.

Der Erfindung liegt des Weiteren die Aufgabe zugrunde, einen Ölfilter anzugeben, der bei vereinfachtem Aufbau eine erhöhte Betriebssicherheit aufweist.

Diese Aufgabe wird durch einen Ölfilter mit den Merkmalen des Anspruchs 9 gelöst.

### Offenbarung der Erfindung

Es wird eine Filterpatrone für einen Ölfilter eines Verbrennungsmotors insbesondere für Kraftfahrzeuge vorgeschlagen, bei dem die Filterpatrone ein derart an ihr befestigtes Filterumgehungsventil aufweist, dass die Filterpatrone zusammen mit dem Filterumgehungsventil eine zum gemeinsamen Austausch vorgesehene Baueinheit bildet. Das Filterumgehungsventil ist fest mit der Filterpatrone verbunden, so dass der Benutzer gezwungen ist, bei regelmäßigen Wartungsarbeiten das Filterumgehungsventil gemeinsam mit der Filterpatrone auszutauschen. Mit jedem Einsatz einer neuen Filterpatrone ist sichergestellt, dass auch ein neues Filterumgehungsventil eingebaut wird. Letzteres kann als Austauschteil einfach gestaltet und dimensioniert sein. Da mit jedem Austausch der Filterpatrone erzwungenermaßen auch ein neues Filterumgehungsventil eingesetzt wird, ist trotz der einfachen und kostengünstigen Ausgestaltung eine dauerhafte Funktions- und Betriebssicherheit erreicht.

Das Filterumgehungsventil kann an jeder geeigneten Stelle der Filterpatrone insbesondere unlösbar an ihr befestigt sein. In bevorzugter Weiterbildung weist die Filterpatrone einen im Wesentlichen zylindrisch ausgebildeten, sich entlang einer Längsachse erstreckenden Filterkörper mit zwei gegenüberliegenden Stirnseiten auf, wobei an zumindest einer der Stirnseiten eine Endscheibe am Filterkörper befestigt ist, und wobei das Filterumgehungsventil an der Endscheibe angeordnet ist. Die Endscheibe ist unlösbar mit dem Filterkörper verbunden, wodurch auch eine unlösbare Verbindung zwischen dem Filterumgehungsventil und der Filterpatrone gebildet ist. Es entsteht eine koaxiale Bauweise mit geringem Platzbedarf bei hoher Funktionssicherheit.

Vorteilhaft ist zumindest ein Teil des Filterumgehungsventils einteilig mit der Endscheibe ausgebildet. Hierdurch werden mehrere Vorteile erreicht: Neben einer kostengünstigen Fertigung als Austauschteil ergibt sich selbst bei schwacher Dimensionierung ein hohes Maß an Strukturfestigkeit und Lagegenauigkeit, was der Betriebssicherheit zugute kommt. Des Weiteren ist der erneute Einsatz eines gebrauchten Filterumgehungsventils zuverlässig verhindert, was ebenfalls zur Steigerung der Betriebssicherheit beiträgt.

Es kommen verschiedene geeignete Ausführungsformen des Filterumgehungsventils in Betracht. Bevorzugt weist das Filterumgehungsventil einen linear gegen eine Druckfeder verschiebbaren Ventilkörper auf, wobei die Druckfeder gegen eine Druckfläche der Endscheibe abgestützt ist. Bei konstruktiv einfachem Aufbau lässt sich eine zuverlässige Schaltfunktion des Filterumgehungsventils zwischen seinem geöffneten und seinem geschlossenen Zustand bei präzise einstellbarer und reproduzierbarer Schaltdruckdifferenz sicherstellen.

Der Ventilkörper ist zweckmäßig auf einer an der Endscheibe angeformten Linearführung geführt. Die einteilige Ausgestaltung der Linearführung mit der Endscheibe stellt bei geringen Fertigungskosten eine zuverlässige Führung und Lagefixierung des Ventilkörpers relativ zur Filterpatrone sicher. Bei einfachem Aufbau ist eine zuverlässige Funktion über den Lebenszyklus der regelmäßig auszutauschenden Baueinheit sichergestellt.

Bevorzugt ist ein separates Ventilgehäuseteil mit einem Ventilsitz für den Ventilkörper vorgesehen und insbesondere rastend an der Endscheibe befestigt. Das Ventilgehäuseteil mit dem Ventilsitz kann einfach, kostengünstig und mit hoher Präzision als separates Bauteil für sich alleine hergestellt werden. Eine anschließende Montage zusammen mit dem federvorgespannten Ventilkörper ist insbesondere im Zusammenspiel mit der vorgenannten Verrastung mit geringem Aufwand möglich.

Ein entsprechend ausgestalteter Ölfilter ist mit einem Filtergehäuse versehen, welches ein Ablaufventil zum Entleeren des Filtergehäuses bei Wartungsarbeiten aufweist. Das den Ventilsitz des Filterumgehungsventils tragende Ventilgehäuseteil bildet vorteilhaft einen Ventilkörper für das Ablaufventil. Hierdurch wird eine Baueinheit gebildet, bei deren zyklischen Auswechseln neben der Filterpatrone und dem Filterumgehungsventil auch der Ventilkörper des Ablaufventils mit ausgetauscht wird. Bei einfachem Aufbau und Handhabbarkeit kann eine dauerhafte Dichtigkeit des Ablaufventils erreicht werden.

Das den Ventilsitz tragende Ventilgehäuseteil weist vorteilhaft gegenüber der Filterpatrone und insbesondere gegenüber deren Endscheibe ein Axialspiel auf. Bevorzugt weist das Filtergehäuse einen koaxial dazu ausgerichteten zylindrischen Ventilsitz für den Ventilkörper des Ablaufventils auf. Hierdurch werden Maßschwankungen zwischen der Filterpatrone und dem Filtergehäuse ausgeglichen, die infolge von Fertigungstoleranzen, Druckpulsationen, Temperaturänderungen oder dergleichen auftreten. Die Filterpatrone kann sich in Axialrichtung ausdehnen oder zusammenziehen, wobei das vorgenannte Axialspiel unabhängig von diesen Maßänderungen eine zuverlässige Dichtfunktion des Filterumgehungsventils aufrecht erhält. Auch der zylindrische Dichtsitz des Ablaufventils ist unempfindlich gegen axiale Positionsschwankungen des Ventilkörpers. Erst wenn das abnehmbare Gehäuseteil um ein bestimmtes Axialmaß vom Ventilkörper des Ablaufventils abgezogen wird, kann das Öl ablaufen.

### Kurze Beschreibung der Zeichnungen

Ein Ausführungsbeispiel der Erfindung ist nachfolgend anhand der Zeichnung näher beschrieben. Es zeigen:
Figur 1 in einer Längsschnittdarstellung einen Ölfilter mit einer erfindungsgemäßen Filterpatrone, an deren Endscheibe ein Filterumgehungsventil befestigt ist, dessen Ventilgehäuseteil einen Ventilkörper für das Ablaufventil des Ölfilters bildet;
Figur 2 eine vergrößerte Detailansicht der Anordnung nach Figur 1 mit Einzelheiten der konstruktiven Ausgestaltung des Filterumgehungsventils und des Ablaufventils.

### Ausführungsform(en) der Erfindung

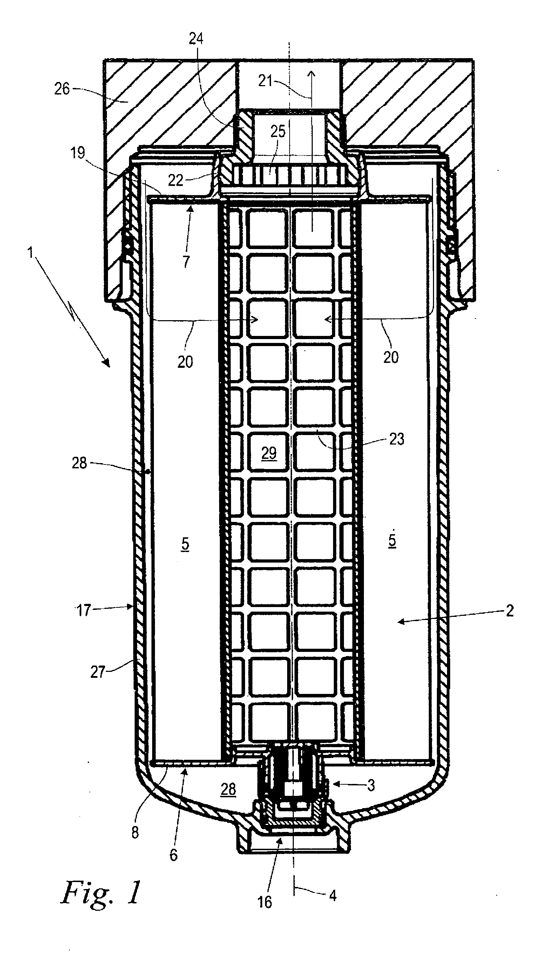

Fig. 1 zeigt in einer Längsschnittdarstellung einen erfindungsgemäßen Ölfilter 1 eines Verbrennungsmotors insbesondere für Kraftfahrzeuge. Der Ölfilter 1 umfasst ein Filtergehäuse 17 mit einem motorfesten Gehäuseoberteil 26 und einem darin eingeschraubten Gehäuseunterteil 27. Im Innenraum des Filtergehäuses 17 ist eine auswechselbare Filterpatrone 2 zur Filtrierung eines hindurchtretenden Ölstromes angeordnet. Das Gehäuseunterteil 27 und die Filterpatrone 2 sind im Wesentlichen zylindrisch ausgebildet, wobei sie sich koaxial entlang einer Längsachse 4 erstrecken. Die Filterpatrone 2 umfasst einen im Wesentlichen zylindrischen Filterkörper 5 mit zwei in der Axialrichtung sich gegenüberliegenden Stirnseiten 6, 7. An den beiden Stirnseiten 6, 7 ist je eine Endscheibe 8, 19 unlösbar mit dem Filterkörper 5 verbunden. Radial innenseitig des Filterkörpers 5 erstreckt sich in Richtung der Längsachse 4 ein gitterartiges Stützrohr 23, welches zwischen den beiden Endscheiben 8, 19 gehalten ist, und welches als Teil der Filterpatrone 2 zusammen mit dieser ausgetauscht wird.

In das Gehäuseoberteil 26 ist ein rohrartiger Gewindestutzen 24 eingeschraubt. Der Gewindestutzen 24 trägt auf seiner Innenseite einen doppelten Innensechskant, mittels dessen er ein- bzw. ausgeschraubt werden kann. An der dem Gewindestutzen 24 zugewandten Endscheibe 19 ist ein umlaufender Bund 22 einteilig angeformt. Die Filterpatrone 2 ist mit diesem Bund 22 dichtend auf die frei in den Innenraum des Filtergehäuses 18 hervorstehende Umfangsfläche des Gewindestutzens 24 lösbar aufgeschoben. Die Endscheibe 8 und die Endscheibe 19 trennen zusammen mit dem Bund 22 eine äußere Rohseite 28 der Filterpatrone 2 von einer inneren Reinseite 29 der Filterpatrone 2 bzw. des Ölfilters 1. Hierdurch wird im gewöhnlichen Betrieb erreicht, dass in den Innenraum des Filtergehäuses 17 eintretendes Öl radial von außen nach innen entsprechend Pfeilen 20 durch den Filterkörper 5 hindurch von der Rohseite 28 zur Reinseite 29 hindurchtritt und dabei filtriert wird. Hierbei entsteht eine Druckdifferenz zwischen der Rohseite 28 und der Reinseite 29, die radial von außen nach innen auf den Filterkörper 5 wirkt. Das innenliegende Stützrohr 23 stützt dabei den Filterkörper 5 nach innen gegen die wirkende Druckdifferenz ab. Das filtrierte Öl tritt entsprechend einem Pfeil 21 durch den rohrförmigen Gewindestutzen 24 aus dem Ölfilter 1 aus.

Der Ölfilter 1 weist darüber hinaus noch ein Filterumgehungsventil 3 auf, welches oberhalb einer bestimmten Druckdifferenz zwischen der Rohseite 28 und der Reinseite 29 öffnet. Eine solche über dem normalen Betrieb erhöhte Druckdifferenz kann beispielsweise beim Kaltstart des Verbrennungsmotors auftreten, wenn die Ölviskosität für einen gewöhnlichen Durchtritt durch den Filterkörper 5 entsprechend den Pfeilen 20 zu hoch ist. In diesem Falle tritt der Ölstrom unter Umgehung des Filterkörpers 5 direkt von der Rohseite 28 durch das Filterumgehungsventil 3 hindurch in die Reinseite 29 ein.

Der Ölfilter 1 ist in seiner gewöhnlichen hängenden Einbaulage gezeigt, demnach ein dem Gehäuseoberteil 26 gegenüberliegendes unteres Ende des Gehäuseunterteils 27 in Schwerkraft unten liegt. Dort ist das Gehäuseunterteil 27 mit einem Ablaufventil 16 versehen, durch das bei Wartungsarbeiten Öl aus dem Innenraum des Filtergehäuses 17 abgelassen werden kann. Das Filterumgehungsventil 3 und das Ablaufventil 16 sind koaxial zur Längsachse 4 angeordnet.

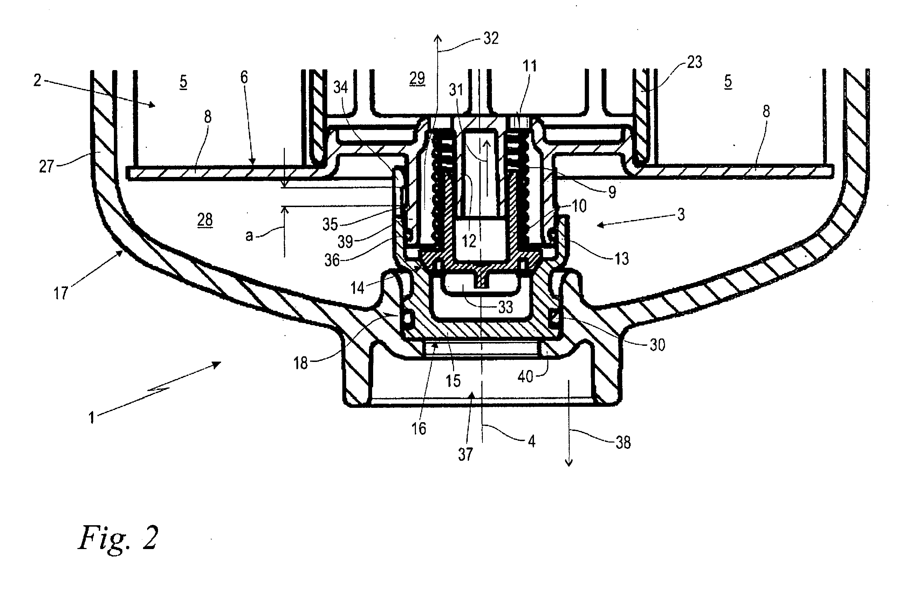

Wie weiter unten im Zusammenhang mit Fig. 2 näher erläutert, ist das Filterumgehungsventil 3 und ein Ventilkörper 15 (Fig. 2) des Ablaufventils 16 fest mit der Filterpatrone 2 verbunden. Sie bilden zusammen mit der Filterpatrone 2 einschließlich ihrer Endscheiben 8, 19 und des Stützrohres 23 eine Bau- und Wartungseinheit, die insgesamt in vorgeschriebenen Wartungsintervallen ausgewechselt wird.

Fig. 2 zeigt eine vergrößerte Detailansicht der Anordnung nach Fig. 1 im Bereich des Filterumgehungsventils 3 und des Ablaufventils 16. Das Filterumgehungsventil 3 ist an der unteren Endscheibe 8 der Filterpatrone 2 angeordnet. Dabei ist ein Teil des Filterumgehungsventils 3 einteilig mit der Endscheibe 8 wie folgt ausgebildet: Koaxial zur Längsachse 4 ragen in der Axialrichtung eine zylindrische Linearführung 12 und eine außenseitig mit Abstand die Linearführung 12 umschließende Hülse 39 ausgehend von der Endscheibe 8 und von der Reinseite 29 fortweisend hervor. Im radialen Zwischenraum zwischen der Linearführung 12 und der Hülse 39 ist durch die Endscheibe 8 eine kreisringförmige Druckfläche 11 für eine daran anliegende Druckfeder 9 gebildet. Die Druckfläche 11, die Linearführung 12 und die Hülse 39 sind einteilig mit der Endscheibe 8 ausgebildet. Ein als separates Teil gefertigter Ventilkörper 10 ist auf die Linearführung 12 aufgeschoben und koaxial auf ihr gleitend geführt. Die Druckfeder 9 liegt an ihrem der Druckfläche 11 gegenüberliegenden Ende am Ventilkörper 10 an. Durch eine Vorspannkraft der Druckfeder 9 wird der Ventilkörper 10 von der Reinseite fortweisend parallel zur Längsachse 4 vorgespannt.

Des Weiteren ist ein separates Ventilgehäuseteil 13 mit einem konischen Ventilsitz 14 für den Ventilkörper 10 vorgesehen. Das Ventilgehäuseteil 13 mit dem Ventilsitz 14 kann fest und unlösbar beispielsweise durch Verschweißen, Verkleben oder dergleichen mit der Endscheibe 8 verbunden sein. Auch kann es zweckmäßig sein, den Ventilsitz 14 in einem Abschnitt der Endscheibe 8 auszuformen. Im gezeigten Ausführungsbeispiel ist das Ventilgehäuseteil 13 rastend an der Endscheibe befestigt. Hierzu ist die Hülse 39 mit einer in Umfangsrichtung umlaufenden Rastkante 35 versehen. Das Ventilgehäuseteil 13 weist Rastzungen 34 auf, die die Rastkante 35 mit einem Axialspiel a hintergreifen. Hierdurch ist das Ventilgehäuseteil 13 unverlierbar an der Hülse 39 der Endscheibe 8 gehalten. Des Weiteren ist die Hülse 39 noch auf ihrer Umfangsseite mit einem umlaufenden Dichtring 36 versehen, der das Ventilgehäuse 13 ausgangsseitig des Ventilsitzes 14 gegenüber der Hülse 39 abdichtet, dabei jedoch in Verbindung mit dem Axialspiel a eine Relativbewegung des Ventilgehäuseteils 13 gegenüber der Hülse 39 zulässt.

Das Ventilgehäuseteil 13 ist noch eingangseitig des Ventilsitzes 14 mit Fenstern 33 versehen, demnach der auf der Rohseite 28 vorherrschende Öldruck auch auf der äußeren bzw. unteren Stirnfläche des Ventilkörpers 10 wirkt. Auf der in Axialrichtung gegenüberliegenden inneren bzw. oberen Fläche des Ventilkörpers 10 wirkt der auf der Reinseite 29 vorherrschende Öldruck, so dass sich insgesamt im Betrieb eine am Ventilkörper 10 zur Reinseite 29 hin und entgegen der Vorspannkraft der Druckfeder 9 wirkende Druckdifferenz einstellt. Oberhalb einer Grenz- bzw. Schaltdruckdifferenz wird die Vorspannkraft der Druckfeder 9 überwunden, in dessen Folge der Ventilkörper 10 von seinem Dichtsitz 14 in Richtung eines Pfeiles 31 koaxial zur Längsachse 4 abhebt. Hierbei kann Öl durch die Fenster 33 am Ventilsitz 14 vorbei entsprechend einem Pfeil 32 unter Umgehung des Filterkörpers 5 direkt von der Rohseite 28 zur Reinseite 29 gelangen.

Zur Bildung des Ablaufventils 16 ist das Gehäuseteil 27 an seinem in Schwerkraftrichtung unten liegenden Ende mit einer koaxial zur Längsachse 4 angeordneten Ablauföffnung 37 sowie mit einem zylindrischen, ebenfalls koaxial zur Längsachse 4 angeordneten Ventilsitz 18 versehen. Ein Ventilkörper 15 des Ablaufventils 16 trägt an seinem unteren Ende auf seiner Umfangswand einen umlaufenden Dichtring 30, der den Ventilkörper 15 gegenüber dem Ventilsitz 18 des Gehäuseunterteils 27 abdichtet. Dabei ist jedoch eine Relativbewegung des Ventilkörpers 15 achsparallel zur Längsachse 4 möglich. Das Ventilgehäuseteil 13 des Filterumgehungsventils 3 und der Ventilkörper 15 des Ablaufventils 16 sind einteilig ausgebildet, demnach das den Ventilsitz 14 tragende Ventilgehäuseteil 3 gleichzeitig auch den Ventilkörper 15 für das Ablaufventil 16 bildet. Infolge des oben beschriebenen Axialspiels a zwischen den Federzungen 34 und der Rastkante 35 weist die Baueinheit aus dem Ventilgehäuseteil 13 und dem Ventilkörper 15 ein ebensolches Axialspiel a gegenüber der Filterpatrone 2 bzw. der Endscheibe 8 auf. Infolge dieses Axialspiels a und der Vorspannkraft der Druckfeder 9 ist diese Baueinheit im gewöhnlichen Betrieb von der Endscheibe 8 fortweisend in Richtung eines Pfeiles 38 gegen einen Absatz 40 gedrückt. Außerdem kann die Filterpatrone 2 infolge des Axialspiels a gegenüber dem Boden des Gehäuseunterteils 27 eine axiale Relativbewegung ausführen, ohne dass der Ventilkörper 10 des Filterumgehungsventils 3 von seinem Ventilsitz 14 abhebt, und ohne dass der Ventilkörper 15 von seiner gezeigten Betriebsposition aus dem Ventilsitz 18 herausgezogen wird. Die Dichtigkeit des Ablaufventils 16 und die Funktionssicherheit des Filterumgehungsventils 3 sind dauerhaft sichergestellt.

Bei Wartungsarbeiten wird das Gehäuseunterteil 27 zunächst nur teilweise aus dem Gehäuseoberteil 26 (Fig. 1) herausgeschraubt, wobei es gegenüber diesem eine axiale Relativbewegung in Richtung des Pfeiles 38 ausführt. Da die Filterpatrone 2 am Gewindestutzen 24 (Fig. 1) gehalten ist, findet diese axiale Relativbewegung des Gehäuseoberteils 27 auch gegenüber der Filterpatrone 2, dem darin integrierten Filterumgehungsventil 3 und dem Ventilkörper 15 des Ablaufventils 16 statt. Da der Ventilkörper 15 mittels der Rastzunge 34 an der Filterpatrone 2 befestigt ist, wird er beim weiteren Aufschrauben des Gehäuseunterteils 27 aus dem zylindrischen Dichtsitz 18 herausgezogen, in dessen folge das im Innenraum des Filtergehäuses 17 befindliche Öl durch die Ablauföffnung 37 ablaufen kann. Nach anschließendem vollständigen Entfernen des Gehäuseunterteils 27 kann die Baueinheit aus der Filterpatrone 2, dem Filterumgehungsventil 3 und dem Ventilkörper 15 als gemeinsame Wartungseinheit vom Gewindestutzen 24 (Fig. 1) abgezogen und insgesamt ausgetauscht werden. Der Einbau erfolgt in umgekehrter Reihenfolge, wobei die Vorspannkraft der Druckfeder 9 den Ventilkörper 15 in seinen Ventilsitz 18 entsprechend der Betriebsposition nach Fig. 2 hineindrückt.

## Patentansprüche

1. Ölfilterpatrone (2) eines Verbrennungsmotors insbesondere für Kraftfahrzeuge, wobei die Ölfilterpatrone (2) ein derart an ihr befestigtes Filterumgehungsventil (3) aufweist, dass die Ölfilterpatrone (2) zusammen mit dem Filterumgehungsventil (3) eine zum gemeinsamen Austausch vorgesehene Baueinheit bildet, **dadurch gekennzeichnet, dass** ein einen Ventilsitz (14) für einen Ventilkörper (10) des Filterumgehungsventils (3) tragendes Ventilgehäuseteil (13) einen Ventilkörper (15) für ein Ablaufventil (16) eines Ölfilters (1) bildet und das Ventilgehäuseteil (13) und der Ventilkörper (15) einteilig ausgebildet sind.

2. Ölfilterpatrone nach Anspruch 1, **dadurch gekennzeichnet, dass** die Ölfilterpatrone (2) einen im wesentlichen zylindrisch ausgebildeten, sich entlang einer Längsachse (4) erstreckenden Filterkörper (5) mit zwei gegenüberliegenden Stirnseiten (6, 7) aufweist, wobei an zumindest einer der Stirnseiten (6, 7) eine Endscheibe (8) am Filterkörper (5) befestigt ist und wobei das Filterumgehungsventil (3) an der Endscheibe (8) angeordnet ist.

3. Ölfilterpatrone nach Anspruch 2, **dadurch gekennzeichnet, dass** zumindest ein Teil des Filterumgehungsventils (3) einteilig mit der Endscheibe (8) ausgebildet ist.

4. Ölfilterpatrone nach Anspruch 3, **dadurch gekennzeichnet, dass** das Filterumgehungsventil (3) einen linear gegen eine Druckfeder (9) verschiebbaren Ventilkörper (10) aufweist, wobei die Druckfeder (9) gegen eine Druckfläche (11) der Endscheibe (8) abgestützt ist.

5. Ölfilterpatrone nach Anspruch 4, **dadurch gekennzeichnet, dass** der Ventilkörper (10) auf einer an der Endscheibe (8) angeformten Linearführung (12) geführt ist.

6. Ölfilterpatrone nach Anspruch 4 oder 5, **dadurch gekennzeichnet, dass** ein separates Ventilgehäuseteil (13) mit einem Ventilsitz (14) für den Ventilkörper (10) vorgesehen und insbesondere rastend an der Endscheibe (8) befestigt ist.

7. Ölfilterpatrone nach einem der vorhergehenden Ansprüche, **dadurch gekennzeichnet, dass** das den Ventilsitz (14) tragende Ventilgehäuseteil (13) gegenüber der Endscheibe (8) ein Axialspiel (a) aufweist.

8. Ölfilter (1) eines Verbrennungsmotors insbesondere für Kraftfahrzeuge, umfassend eine Ölfilterpatrone (2), ein Filterumgehungsventil (3) und ein Filtergehäuse (17) zur Aufnahme der Ölfilterpatrone (2), wobei das Filtergehäuse (17) ein Ablaufventil (16) aufweist und die Ölfilterpatrone (2) zusammen mit dem Filterumgehungsventil (3) eine zum gemeinsamen Austausch vorgesehene Baueinheit bildet, **dadurch gekennzeichnet, dass** ein Ventilgehäuseteil (13) des Filterumgehungsventils (3) einen Ventilkörper (15) für das Ablaufventil (16) des Ölfilters (1) bildet und das Ventilgehäuseteil (13) und der Ventilkörper (15) einteilig ausgebildet sind.

9. Ölfilter nach Anspruch 8, **dadurch gekennzeichnet, dass** das Filterumgehungsventil (3) und das Ablaufventil (16) koaxial zueinander angeordnet sind, wobei das Filtergehäuse (17) einen zylindrischen Ventilsitz (18) für den Ventilkörper (15) des Ablaufventils (16) aufweist, und wobei das Ventilgehäuseteil (13) des Filterumgehungsventils (3) gegenüber der Ölfilterpatrone (2) ein Axialspiel (a) aufweist.

## Claims

1. Oil filter cartridge (2) of an internal combustion engine, in particular for motor vehicles, the oil filter cartridge (2) featuring a filter bypass valve (3) attached to it in such a way that the oil filter cartridge (2) in conjunction with the filter bypass valve (3) forms an assembly intended for being exchanged together, **characterized in that** a valve housing part (13) supporting a valve seat (14) for a valve body (10) of the filter bypass valve (3) forms a valve body (15) for a drain valve (16) of an oil filter (1) and that the valve housing part (13) and the valve body (15) are designed as one piece.

2. Oil filter cartridge according to claim 1, **characterized in that** the oil filter cartridge (2) features a filter body (5) substantially cylindrical with two opposing end faces (6, 7) and extending along a longitudinal axis (4), an end plate (8) being attached to at least one of the end faces (6, 7) at the filter body (5), and the filter bypass valve (3) being disposed at the end plate (8).

3. Oil filter cartridge according to claim 2, **characterized in that** at least one part of the filter bypass valve (3) is designed as one piece with the end plate (8).

4. Oil filter cartridge according to claim 3, **characterized in that** the filter bypass valve (3) features a valve body (10) linearly displaceable against a compression spring (9), the compression spring (9) being supported against a pressure-loaded area (11) of the end plate (8).

5. Oil filter cartridge according to claim 4, **characterized in that** the valve body (10) is guided by a linear guiding (12) integrally molded to the end plate (8).

6. Oil filter cartridge according to claim 4 or 5, **characterized in that** a separate valve housing part (13) with a valve seat (14) is provided for the valve body (10) and in particular engagingly attached to the end plate (8).

7. Oil filter cartridge according to one of the above claims, **characterized in that** the valve housing part (13) supporting the valve seat (14) features an axial play (a) in relation to the end plate (8).

8. Oil filter (1) of an internal combustion engine, in particular for motor vehicles, comprising an oil filter cartridge (2), a filter bypass valve (3) and a filter housing (17) for receiving the oil filter cartridge (2), the filter housing (17) featuring a drain valve (16) and the oil filter cartridge (2) forming in conjunction with the filter bypass valve (3) an assembly intended for being exchanged together, **characterized in that** a valve housing part (13) of the filter bypass valve (3) forms a valve body (15) for the drain valve (16) of the oil filter (1) and that the valve housing part (13) and the valve body (15) are designed as one piece.

9. Oil filter according to claim 8, **characterized in that** the filter bypass valve (3) and the drain valve (16) are disposed coaxially to each other, the filter housing (17) featuring a cylindrical valve seat (18) for the valve body (15) of the drain valve (16), and the valve housing part (13) of the filter bypass valve (3) featuring an axial play (a) in relation to the oil filter cartridge (2).

## Revendications

1. Cartouche de filtre à huile (2) d'un moteur à combustion interne, notamment pour des véhicules automobiles, la cartouche de filtre à huile (2) présentant une soupape de dérivation de filtre (3) fixée sur elle de manière à ce que la cartouche de filtre à huile (2) forme, avec la soupape de dérivation de filtre (3), une unité modulaire prévue pour un échange commun, **caractérisée en ce qu'**une pièce de cage de soupape (13) portant un siège de soupape (14) pour un corps de soupape (10) de la soupape de dérivation de filtre (3) forme un corps de soupape (15) pour une soupape d'écoulement (16) d'un filtre à huile (1) et **en ce que** la pièce de cage de soupape (13) et le corps de soupape (15) forment un seul bloc.

2. Cartouche de filtre à huile selon la revendication 1, **caractérisée en ce que** la cartouche de filtre à huile (2) présente un corps de filtre (5) essentiellement cylindrique, s'étendant le long d'un axe longitudinal (4) et comportant deux faces frontales opposées (6, 7), un disque d'extrémité (8) étant fixé, sur au moins l'une des faces frontales (6, 7), sur le corps de filtre (5) et la soupape de dérivation de filtre (3) étant placée sur le disque d'extrémité (8).

3. Cartouche de filtre à huile selon la revendication 2, **caractérisée en ce qu'**au moins une partie de la soupape de dérivation de filtre (3) forme un seul bloc avec le disque d'extrémité (8).

4. Cartouche de filtre à huile selon la revendication 3, **caractérisée en ce que** la soupape de dérivation de filtre (3) présente un corps de soupape (10) pouvant être déplacé en sens linéaire contre un ressort de pression (9), le ressort de pression (9) étant étayé contre une surface de pression (11) du disque d'extrémité (8).

5. Cartouche de filtre à huile selon la revendication 4, **caractérisée en ce que** le corps de soupape (10) est guidé sur un rail linéaire (12) moulé sur le disque d'extrémité (8).

6. Cartouche de filtre à huile selon la revendication 4 ou 5, **caractérisée en ce qu'**une pièce de cage de soupape (13) séparée avec un siège de soupape (14) pour le corps de soupape (10) est prévue et est fixée, notamment de manière encliquetable, sur le disque d'extrémité (8).

7. Cartouche de filtre à huile selon l'une des revendications précédentes, **caractérisée en ce que** la pièce de cage de soupape (13) portant le siège de soupape (14) présente un jeu axial (a) par rapport au disque d'extrémité (8).

8. Filtre à huile (1) d'un moteur à combustion interne, notamment pour des véhicules automobiles, comprenant une cartouche de filtre à huile (2), une soupape de dérivation de filtre (3) et un boîtier de filtre (17) destiné à réceptionner la cartouche de filtre à huile (2), le boîtier de filtre (17) présentant une soupape d'écoulement (16) et la cartouche de filtre à huile (2) formant, avec la soupape de dérivation de filtre (3), une unité modulaire prévue pour un échange commun, **caractérisé en ce qu'**une pièce de cage de soupape (13) de la soupape de dérivation de filtre (3) forme un corps de soupape (15) pour la soupape d'écoulement (16) du filtre à huile (1) et **en ce que** la pièce de cage de soupape (13) et le corps de soupape (15) forment un seul bloc.

9. Filtre à huile selon la revendication 8, **caractérisé en ce que** la soupape de dérivation de filtre (3) et la soupape d'écoulement (16) sont disposées de manière coaxiale l'une par rapport à l'autre, le boîtier de filtre (17) présentant un siège de soupape (18) cylindrique pour le corps de soupape (15) de la soupape d'écoulement (16) et la pièce de cage de soupape (13) de la soupape de dérivation de filtre (3) présentant un jeu axial (a) par rapport à la cartouche de filtre à huile (2).
